# EUROPEAN PATENT APPLICATION

(11) **EP 3 955 347 A1**
(43) Date of publication of application: **16.02.2022**
(21) Application number: 20788108.7
(22) Date of filing: 07.04.2020
(51) Int. Cl.: H01M 4/505, C01G 53/00, H01M 4/36, H01M 4/525

(54) **PRECURSOR, METHOD FOR MANUFACTURING PRECURSOR, POSITIVE ELECTRODE MATERIAL, METHOD FOR MANUFACTURING POSITIVE ELECTRODE MATERIAL, AND LITHIUM-ION SECONDARY CELL**

(30) Priority: 11.04.2019 JP 2019075282
(71) Applicant: JFE Mineral Company, Ltd., Tokyo 105-0014 (JP); JFE Steel Corporation, Tokyo 100-0011 (JP)
(72) Inventor: NAGANO, Rintaro, Tokyo 105-0014 (JP); HAMANO, Yoshiaki, Tokyo 105-0014 (JP); TOKUMASU, Koki, Tokyo 105-0014 (JP); EMA, Mika, Tokyo 105-0014 (JP); SUTO, Mikito, Tokyo 100-0011 (JP); MATSUZAKI, Akira, Tokyo 100-0011 (JP); MASUOKA, Hiroyuki, Tokyo 100-0011 (JP)
(74) Representative: Grünecker Patent- und Rechtsanwälte PartG mbB
(86) International application number: PCT/JP2020/015606
(87) International publication number: WO 2020/209239

(57) **Abstract**

Provided are a precursor of a positive electrode material with which it is possible to obtain a lithium-ion secondary cell having an excellent discharge capacity and cycle characteristics, and a method for manufacturing the precursor. The precursor is a precursor of a positive electrode material used for a lithium-ion secondary cell, wherein the precursor is at least one substance selected from the group consisting of nickel-manganese composite hydroxides and nickel-manganese composite oxides, the precursor contains nickel and manganese, the ratio of the nickel content relative to the nickel content and the manganese content is 0.45-0.60 inclusive in molar ratio, and the average valence of manganese is below 4.0.

## Description

### TECHNICAL FIELD

The present invention relates to a precursor, a method of producing a precursor, a positive electrode material, a method of producing a positive electrode material, and a lithium ion secondary battery.

### BACKGROUND ART

As a positive electrode material (positive electrode active material) of a lithium ion secondary battery, lithium cobalt oxide is widely used.

In the meantime, cobalt contained in lithium cobalt oxide is a rare metal whose annual output is as low as about 20,000 tons. Hence, from the perspective of the resource amount or the cost, there is a demand for a positive electrode material to replace lithium cobalt oxide.

Accordingly, as a cobalt-free positive electrode material, a lithium-containing nickel manganese composite oxide has been conventionally proposed (Patent Literature 1) .

### CITATION LIST

### PATENT LITERATURE

Patent Literature 1: JP 2002-42813 A

### SUMMARY OF INVENTION

### TECHNICAL PROBLEMS

A lithium ion secondary battery using a conventional lithium-containing nickel manganese composite oxide as a positive electrode material may sometimes have insufficient discharging capacity and cycle characteristic.

An object of the present invention is therefore to provide a precursor of a positive electrode material which allows to obtain a lithium ion secondary battery having excellent discharging capacity and cycle characteristic, and a method of producing the precursor.

Another object of the present invention is to provide a positive electrode material which allows to obtain a lithium ion secondary battery having excellent discharging capacity and cycle characteristic, and a method of producing the positive electrode material.

Yet another object of the present invention is to provide a lithium ion secondary battery having excellent discharging capacity and cycle characteristic.

### SOLUTION TO PROBLEMS

The present inventors found, through an earnest study, that employing the configuration described below enables the achievement of the above-mentioned objects, and the invention has been completed.

Specifically, the present invention provides the following [1] to [20].
[1] A precursor of a positive electrode material used in a lithium ion secondary battery, wherein the precursor is at least one selected from a group consisting of a nickel manganese composite hydroxide and a nickel manganese composite oxide, wherein the precursor contains nickel and manganese, wherein a molar ratio of a nickel content to a total of the nickel content and a manganese content is not less than 0.45 and not more than 0.60, and wherein an average valence of manganese is less than 4.0.
[2] The precursor according to [1], wherein an average particle size of primary particles is less than 0.6 µm.
[3] The precursor according to [1] or [2], wherein a mass reduction amount when the precursor is heated from room temperature to 1,050°C in an air atmosphere is not less than 16 mass%.
[4] The precursor according to any one of [1] to [3], wherein a [001]/[101] peak ratio that is a peak intensity ratio of a peak intensity in a [001] direction to a peak intensity in a [101] direction in X-ray diffraction is not higher than 14,
   where a peak intensity in the [001] direction is a maximum peak intensity in a range from 17° to 21° of a diffraction angle 2θ, and a peak in the [101] direction is a maximum peak intensity in a range from 30° to 40° of a diffraction angle 2θ.
[5] A method of producing the precursor of any one of [1] to [4], the method comprising: introducing a nickel source, a manganese source, an ammonium source and an aqueous alkaline solution into a reaction vessel solution having pH of not lower than 9 and not higher than 12 to obtain a precipitate.
[6] The method of producing the precursor according to [5], wherein an aqueous solution containing the nickel source, the manganese source and the ammonium source is used as a raw material aqueous solution, and wherein the raw material aqueous solution and the aqueous alkaline solution are introduced into the reaction vessel solution to obtain the precipitate.
[7] The method of producing the precursor according to [6], wherein in the raw material aqueous solution, a molar ratio of a content of the ammonium source in terms of ammonium to a total of a content of the nickel source in terms of nickel and a content of the manganese source in terms of manganese is more than 0 and not more than 1.
[8] The method of producing the precursor according to [6] or [7], wherein the raw material aqueous solution has pH of not higher than 6.
[9] The method of producing the precursor according to any one of [6] to [8], wherein the precipitate is dried at temperature of not higher than 100°C.
[10] The method of producing the precursor according to any one of [6] to [9], wherein the precipitate is dried in a non-oxidizing atmosphere.
[11] A positive electrode material used in a lithium ion secondary battery, wherein the positive electrode material is a lithium-containing nickel manganese composite oxide, wherein the positive electrode material contains lithium, nickel and manganese, and wherein the positive electrode material is obtained using the precursor of any one of [1] to [4].
[12] A positive electrode material used in a lithium ion secondary battery, wherein the positive electrode material is a lithium-containing nickel manganese composite oxide, wherein the positive electrode material contains lithium, nickel and manganese, and wherein a content of a composite oxide expressed by Formula Li₂MnO₃ is more than 0 mass% and not more than 20 mass%.
[13] The positive electrode material according to [11] or [12], further containing at least one element A selected from the group consisting of aluminum, silicon, titanium, zirconium, calcium, potassium, barium, strontium and sulfur.
[14] The positive electrode material according to any one of [11] to [13], wherein in a relative frequency distribution of a molar ratio between a manganese content and a nickel content, a mean value is not lower than 0.85 and not higher than 1.20, and a half-value width is not more than 0.90.
[15] The positive electrode material according to any one of [11] to [14], wherein a mass increase amount when the positive electrode material is left to stand in an air atmosphere at temperature of 25°C and humidity of 60% for 240 hours is not more than 0.75 mass%.
[16] A method of producing the positive electrode material of any one of [11] to [15], the method comprising: mixing the precursor of any one of [1] to [4] with a lithium-containing compound, and firing a mixture thus obtained to obtain a fired product.
[17] The method of producing the positive electrode material according to [16], wherein a molar ratio of a content of the lithium-containing compound in terms of lithium to a total of a content of the precursor in terms of nickel and a content of the precursor in terms of manganese is more than 1.03 and less than 1.10.
[18] The method of producing the positive electrode material according to [16] or [17], wherein the mixture is subjected to preliminary firing at temperature of not lower than 400°C and not higher than 700°C and thereafter subjected to main firing at temperature of not lower than 800°C and not higher than 1,000°C to obtain the fired product.
[19] The method of producing the positive electrode material according to any one of [16] to [18], wherein the fired product is washed with water.
[20] A lithium ion secondary battery comprising a positive electrode containing the positive electrode material of any one of [11] to [15], a negative electrode, and an ion conductive medium that is interposed between the positive electrode and the negative electrode and that conducts lithium ions.

### ADVANTAGEOUS EFFECTS OF INVENTION

According to the invention, a lithium ion secondary battery having excellent discharging capacity and cycle characteristic can be obtained.

### DESCRIPTION OF EMBODIMENTS

### [Precursor]

The precursor according to the invention is a precursor of a positive electrode material to be used in a lithium ion secondary battery, is at least one selected from a group consisting of a nickel manganese composite hydroxide and a nickel manganese composite oxide, contains nickel and manganese, has a molar ratio of a nickel content to a total of the nickel content and a manganese content of not less than 0.45 and not more than 0.60, and has an average valence of manganese of less than 4.0.

Using the precursor of the invention, a positive electrode material (lithium-containing nickel manganese composite hydroxide) to be described later is obtained. A lithium ion secondary battery using the obtained positive electrode material has excellent discharging capacity and cycle characteristic. The presumable reason therefor is described below.

For instance, when a positive electrode material (lithium-containing nickel manganese composite oxide) is produced using a precursor containing manganese with a high valence (e.g., Mn⁴⁺), a repulsive force between lithium (Li⁺) and manganese (Mn⁴⁺) that is the precursor is so large that lithium cannot be evenly dispersed to the inside of the precursor. Accordingly, the discharging capacity and the cycle characteristic degrade.

In the precursor according to the invention, on the other hand, manganese has as low average valence as less than 4.0. When a positive electrode material is produced using the foregoing precursor, the repulsive force between lithium and manganese that is the precursor is relatively small (lithium easily reacts with the precursor), and lithium is likely to be evenly dispersed to the inside of the precursor. Accordingly, the discharging capacity and the cycle characteristic are excellent.

### <Composition>

The precursor of the invention contains nickel (Ni) and manganese (Mn).

In the precursor of the invention, a molar ratio of a nickel content to a total of the nickel content and a manganese content (hereinafter, expressed as "Ni/(Ni + Mn)" in some cases) is not less than 0.45 and not more than 0.60, and preferably not less than 0.48 and not more than 0.55. That is, the precursor of the invention contains nickel and manganese at the substantially same ratio.

It is preferable that the precursor of the invention is substantially free of cobalt (Co) from the perspective of the resource amount or the cost. Specifically, for instance, a cobalt content of the precursor of the invention is preferably not more than 0.1 mass%, more preferably not more than 0.01 mass% and further preferably not more than 0.001 mass%. It is particularly preferable that the precursor of the invention is free of cobalt (not containing cobalt at all).

The composition (contents of metal elements) of the precursor is determined by inductively coupled plasma (ICP) emission spectroscopic analysis.

<Average Valence of Manganese>

As described above, the average valence of manganese in the precursor of the invention is less than 4.0, and, because the discharging capacity and the cycle characteristic are more excellent, the average valence of manganese is preferably not more than 3.8, more preferably not more than 3.5 and further preferably not more than 3.2.

Meanwhile, the average valence of manganese in the precursor of the invention is, for example, not less than 2.5, preferably not less than 2.7 and more preferably not less than 2.9.

The average valence of manganese (Mn) is determined by X-ray photoelectron spectroscopy (XPS).

Specifically, using an XPS apparatus (Quantera SXM available from ULVAC-PHI, Inc.), a precursor is subjected to narrow scan analysis under the following conditions to obtain a photoelectron spectrum (also referred to as "narrow spectrum") of the 3s orbital of manganese (Mn3s). The exchange splitting width (ΔE) of the obtained narrow spectrum is measured.

Next, MnO (valence: 2), Mn₂O₃ (valence: 3) and MnO₂ (valence: 4) are used as reference materials, and the ΔE of each of the reference materials is measured in the similar manner.

It is known that the exchange splitting width (ΔE) in the narrow spectrum of the 3s orbital of manganese varies depending on the valence thereof.

Based on the ΔE of each of the reference materials, a calibration curve is prepared. The valence of Mn in the precursor is determined from the prepared calibration curve and the ΔE of the precursor.

Each precursor is subjected to the ΔE measurement three times, and the average value of the measurements is regarded as the average valence of Mn in each precursor.

* Conditions of primary excitation source
Radiation source: X-ray monochromatic Al-Kα
Voltage: 15 kV
Output: 25 kW
Beam diameter: 100 µm diameter
   * Analysis region: 100 µm diameter
   * Conditions of narrow scan analysis
      Mn3s Pass Energy: 55 eV
      Step Size: 0.1 eV

Because the foregoing average valence of manganese (less than 4.0) is easily achieved, the exchange splitting width (ΔE) of Mn3s in the precursor of the invention is preferably not less than 4.9 eV and more preferably not less than 5.0 eV.

Meanwhile, the ΔE of Mn3s in the precursor of the invention is preferably not more than 5.7 eV and more preferably not more than 5.5 eV.

### <Average Particle Size of Primary Particles>

In the precursor of the invention, it is preferable that the average particle size of primary particles (also referred to as "primary particle size") is smaller. When a precursor having a small primary particle size is used to produce a positive electrode material, a moving distance of lithium within the precursor is short, and lithium is likely to be evenly dispersed to an inside of the precursor, whereby the discharging capacity and the cycle characteristic are more excellent.

Specifically, the average particle size of the primary particles in the precursor of the invention is preferably less than 0.6 µm and more preferably not more than 0.1 µm. The lower limit thereof is not particularly limited and, for example, is not less than 0.01 µm and preferably not less than 0.03 µm.

The primary particle size (average particle size of primary particles) of a precursor is determined as described below.

First, the precursor is observed using a scanning electron microscope (SEM), and an SEM image is obtained. In the obtained SEM image, at least 200 primary particles are randomly extracted. A projected area circle equivalent diameter of each of the extracted primary particles (diameter of a circle having the same area as an area of the particle in an SEM image) is determined using an image analysis software. The number average diameter of the obtained diameters is regarded as the average particle size of the primary particles.

It should be noted that the precursor of the invention is, for example, spherical secondary particles formed of multiple primary particles that are aggregated. Exemplary shapes of the primary particles include a plate shape, a needle shape, a spherical shape and a cuboid shape, among which a plate shape is preferred.

### <Mass Reduction Amount>

It is preferable that the mass reduction amount of the precursor of the invention when heated from room temperature to 1,050°C in an air atmosphere (also simply referred to as "mass reduction amount" in this paragraph) is larger.

A precursor (at least one selected from the group consisting of a nickel manganese composite hydroxide and a nickel manganese composite oxide) having a large mass reduction amount indicates a high content of hydroxide. When a positive electrode material is produced using a precursor with a high content of hydroxide, the discharging capacity and the cycle characteristic are more excellent. While the details are unknown, the reason for the foregoing is presumably because hydroxy groups are intricately disposed in the precursor, whereby the crystal structure of the obtained positive electrode material (lithium-containing nickel manganese composite oxide) is suitably structured.

Specifically, the mass reduction amount of the precursor of the invention is preferably not less than 16 mass%, more preferably not less than 17 mass% and further preferably not less than 19 mass%.

The upper limit thereof is not particularly limited, and the mass reduction amount is, for example, not more than 25 mass% and preferably not more than 22 mass%.

The mass reduction amount is determined through the ignition loss measurement described below.

First, one gram of a specimen (precursor) placed in a crucible is heated using an electric furnace to 1,050°C and then naturally cooled. Subsequently, the mass of the specimen that has been naturally cooled is measured. The mass reduction amount is determined from a difference between the mass of the specimen before heating and the mass of the specimen after heating.

### <Peak Intensity Ratio>

The precursor of the invention preferably has a small [001]/[101] peak ratio, i.e., peak intensity ratio of a peak intensity in the [001] direction to a peak intensity in the [101] direction in X-ray diffraction. The peak intensity in the [001] direction is a maximum peak intensity in a range from 17° to 21° of the diffraction angle 2θ. The peak in the [101] direction is a maximum peak intensity in a range from 30° to 40° of the diffraction angle 2θ. Hereinafter, the [001]/[101] peak ratio may be simply called "peak ratio" in some cases.

The precursor having a small [001]/[101] peak ratio tends to have high amorphousness. Although the details are not clear, it is assumed that in a positive electrode material produced using an amorphous precursor, nickel is hardly substituted in lithium sites. As a result, the discharging capacity and the cycle characteristic are more excellent. In this regard, it seems that not only simply high amorphousness is demanded but also there is a suitable range of the peak ratio.

In particular, the [001]/[101] peak ratio of the precursor of the invention is preferably not more than 14, more preferably not more than 10, further preferably not more than 4.5, particularly preferably not more than 4, and most preferably not more than 3.

The lower limit thereof is not particularly limited, and the [001]/[101] peak ratio is, for example, not less than 1.

Using an X-ray diffractometer (X-ray source: CuKα, tube voltage: 40 kV, tube current: 40 mA), an X-ray diffraction (XRD) pattern of the precursor is obtained, and the peak intensity ratio of the peak intensity in the [001] direction to the peak intensity in the [101] direction ([001]/[101] peak ratio) is determined.

### [Method of Producing Precursor]

Next, the method of producing the precursor according to the invention is described.

The method of producing the precursor according to the invention is a method of producing the above-described precursor of the invention, in which a nickel source, a manganese source, an ammonium source and an aqueous alkaline solution are introduced into a reaction vessel solution having pH of not lower than 9 and not higher than 12 to obtain a precipitate (at least one selected from the group consisting of a nickel manganese composite hydroxide and a nickel manganese composite oxide).

The obtained precipitate (more specifically, precipitate having been filtrated from the reaction vessel solution and dried) constitutes the precursor of the invention.

### <Coprecipitation Method>

The method of producing the precursor of the invention is the so-called coprecipitation method. By adopting the coprecipitation method, nickel and manganese can be evenly dispersed at the atomic level.

In the coprecipitation method in the invention, it is preferable that an aqueous solution containing a nickel source, a manganese source and an ammonium source is used as a raw material aqueous solution, and the raw material aqueous solution and an aqueous alkaline solution are introduced into the reaction vessel solution to obtain a precipitate.

In other words, a nickel source and a manganese source as well as an ammonium source are not separately introduced into the reaction vessel solution, but it is preferable that a mixture in which a nickel source and a manganese source are preliminarily mixed with an ammonium source is introduced into the reaction vessel solution.

In this manner, in the reaction vessel solution, ammonium is prevented from acting on the generated precipitate, and unnecessary growth of the primary particles is easily suppressed.

Another reason for suppressing the growth of the primary particles may be because in the raw material aqueous solution, ammonium (NH₄⁺) is coordinated in nickel ions and manganese ions and stabilized.

In the raw material aqueous solution, a molar ratio of a content of the ammonium source in terms of ammonium to a total of a content of the nickel source in terms of nickel and a content of the manganese source in terms of manganese (hereinafter, expressed as "NH₄/(Ni + Mn)" in some cases) is preferably more than 0 and not more than 1, more preferably not less than 0.1 and not more than 0.8 and further preferably not less than 0.2 and not more than 0.6. Meanwhile, in the raw material aqueous solution, a molar ratio of a content of the nickel source in terms of nickel to a content of the manganese source in terms of manganese (Ni/Mn) is preferably 1/1.

The raw material aqueous solution has pH of preferably not higher than 6, more preferably not higher than 5.5 and further preferably not higher than 5. The lower limit thereof is not particularly limited, and pH of the raw material aqueous solution is, for example, not lower than 3, and preferably not lower than 4.

Examples of the nickel source include nickel salts such as nickel sulfate, nickel carbonate, nickel nitrate, nickel acetate and nickel chloride, and nickel sulfate (NiSO₄) is preferred.

Examples of the manganese source include manganese salts such as manganese sulfate, manganese carbonate, manganese nitrate, manganese acetate and manganese chloride, and manganese sulfate (MnSO₄) is preferred.

Examples of the ammonium source include ammonium salts such as ammonium sulfate, ammonium chloride, ammonium nitrate and ammonium carbonate, and ammonium sulfate ((NH₄)₂SO₄) is preferred.

The nickel source, the manganese source and the ammonium source are each preferably used in the form of aqueous solution.

The concentrations (contents) of the nickel source, the manganese source and the ammonium source in the respective aqueous solutions are preferably adjusted so as to have the molar ratio as described above.

As the aqueous alkaline solution, an aqueous sodium hydroxide (NaOH) solution is preferred.

The reaction vessel solution is a content liquid of a reaction vessel and, as described above, has pH of not lower than 9 and not higher than 12. For instance, the reaction vessel solution is prepared by adding an aqueous alkaline solution such as an aqueous sodium hydroxide solution to pure water.

In the process of obtaining a precipitate, the reaction vessel solution is preferably stirred using a stirring rod or the like.

The temperature of the reaction vessel solution is preferably not lower than 30°C and not higher than 60°C, and more preferably not lower than 35°C and not higher than 45°C.

In a case where the positive electrode material of the invention to be described later contains an element A described below, an element A source may be further introduced into the reaction vessel solution. The element A source is preferably contained in the raw material aqueous solution.

Examples of the element A source include salts of the element A such as sulfate, carbonate, nitrate and acetate of the element A.

An amount of the element A source is appropriately adjusted depending on the desired composition.

### <Drying of Precipitate>

It is preferable that the precipitate obtained through coprecipitation is filtrated from the reaction vessel solution (subjected to solid-liquid separation), washed with water, and thereafter dried.

The temperature at which the precipitate is dried (drying temperature) is preferably low because oxidization of the precipitate due to the dehydration reaction is suppressed, and the valence of manganese described above is easily achieved.

Specifically, the drying temperature is preferably not higher than 100°C, more preferably not higher than 90°C, further preferably not higher than 80°C, particularly preferably not higher than 70°C, and most preferably not higher than 60°C.

The lower limit thereof is not particularly limited, and the drying temperature is, for example, not lower than 30°C, and preferably not lower than 40°C.

The atmosphere in which the precipitate is dried (drying atmosphere) is preferably a non-oxidizing atmosphere because oxidization of the precipitate is suppressed, and a small valence of manganese is easily achieved. The non-oxidizing atmosphere is exemplified by a non-oxidizing atmosphere having an oxygen concentration of not more than 10 vol%, and as a specific example thereof, a vacuum atmosphere (e.g., 0.1 MPa or lower) is suitably presented.

The time for drying the precipitate (drying time) is preferably not less than 5 hours.

### [Positive Electrode Material]

The positive electrode material of the invention is next described. The positive electrode material is also called positive electrode active material.

### <First Embodiment>

The positive electrode material of the invention (first embodiment) is a positive electrode material to be used in a lithium ion secondary battery, is a lithium-containing nickel manganese composite oxide, contains lithium, nickel and manganese, and is obtained using the foregoing precursor of the invention.

A lithium ion secondary battery using the positive electrode material that is obtained using the precursor of the invention has excellent discharging capacity and cycle characteristic.

### <Second Embodiment>

The positive electrode material of the invention (second embodiment) is a positive electrode material to be used in a lithium ion secondary battery, is a lithium-containing nickel manganese composite oxide, contains lithium, nickel and manganese, and has a content of a composite oxide expressed by Formula Li₂MnO₃ of more than 0 mass% and not more than 20 mass%. Here, the lithium-containing nickel manganese composite oxide preferably takes on the hexagonal crystal structure.

Hereinafter, the "composite oxide expressed by Formula Li₂MnO₃" is also referred to as "second phase composite oxide" or simply "second phase."

A lithium ion secondary battery using the positive electrode material having the second phase content of more than 0 mass% and not more than 20 mass% has excellent discharging capacity and cycle characteristic.

Because the discharging capacity and the cycle characteristic are more excellent, the second phase content is preferably not less than 2 mass% and not more than 19 mass%, and more preferably not less than 3 mass% and not more than 17 mass%.

The second phase content of the positive electrode material is determined as described below.

First, an X-ray diffraction (XRD) pattern of the positive electrode material is obtained under the following conditions. Subsequently, the obtained XRD pattern is subjected to Rietveld analysis using RIETAN-FP (profile: extended pseudo-Voigt function) and is pattern fitted. Accordingly, the second phase content is determined.
* Apparatus: Debye-Scherrer type diffractometer BL5S2
(Aichi Synchrotron Radiation Center)
* X-ray wavelength: 0.7 Å
* Detector: two-dimensional semiconductor detector PILATUS
* Measurement time: 10 min/specimen
* Specimen: specimen filled in Lindemann glass capillary (0.3 mm diameter)
* Measurement method: permeation method
* Measurement temperature: room temperature

The second phase composite oxide is preferably a monoclinic composite oxide.

More specifically, in the positive electrode material of the invention (second embodiment), a hexagonal crystal composite oxide is preferably mixed with a monoclinic composite oxide (second phase composite oxide) as a heterogeneous phase.

### <Composition>

The positive electrode material of the invention (lithium-containing nickel manganese composite oxide) contains lithium (Li), nickel (Ni) and manganese (Mn).

Combination of nickel and manganese causes disproportion reaction of their respective atoms. Accordingly, the valence variation of Ni having a large free energy change ΔG before and after charging and discharging and having a high voltage can be utilized in charging-discharging reaction, whereby a lithium ion secondary battery with a high voltage and a large capacity can be obtained. In addition, a lithium ion secondary battery to be obtained has excellent cycle characteristic because the crystal structure is stabilized even in the charging state.

The positive electrode material of the invention may further contain at least one element A selected from the group consisting of aluminum (Al), silicon (Si), titanium (Ti), zirconium (Zr), calcium (Ca), potassium (K), barium (Ba), strontium (Sr) and sulfur (S).

The positive electrode material of the invention (lithium-containing nickel manganese composite oxide) preferably contains the composite oxide expressed by the following Formula (1).

(1) LiₐNiₓMn₁₋ₓA_{y}O₂

In Formula (1), a is a number larger than 0.95 and smaller than 1.10, x is a number not smaller than 0.45 and not larger than 0.60, y is a number not smaller than 0 and not larger than 0.02, and A is at least one selected from the group consisting of Al, Si, Ti, Zr, Ca, K, Ba, Sr and S.

In a case where the positive electrode material of the invention is that of the second embodiment described above, the composition of Formula (1) is a composition containing the second phase (composite oxide expressed by Formula Li₂MnO₃).

The composition of the positive electrode material is determined through inductively coupled plasma (ICP) emission spectroscopic analysis.

### <Mean Value and Half-value Width in Relative Frequency Distribution of Molar Ratio (Mn/Ni)>

As described above, the positive electrode material of the invention utilizes the disproportion reaction caused by manganese atoms and nickel atoms as a result of combining manganese and nickel. In order for this reaction to sufficiently proceed, it is preferable that manganese atoms and nickels atoms are adjacent to each other and evenly dispersed in the positive electrode material.

Hence, the positive electrode material of the invention preferably has a mean value of not lower than 0.85 and not higher than 1.20 and a half-value width of not more than 0.90 in the relative frequency distribution of the molar ratio between the manganese content and the nickel content (Mn/Ni). The mean value is more preferably not lower than 0.90 and not higher than 1.10. The half-value width is more preferably not more than 0.80.

With this constitution, a lithium ion secondary battery to be obtained has a high voltage and excellent discharging capacity and cycle characteristic.

The lower limit of the half-value width is not particularly limited, and a smaller half-value width is preferred.

The mean value and the half-value width in the relative frequency distribution of the molar ratio (Mn/Ni) of the positive electrode material are determined through observation using a transmission electron microscope (TEM) and through energy dispersive X-ray spectrometry (EDX). Details thereof are described below.

First, the positive electrode material powder is embedded in a resin, and the resin is then processed into flakes using a focused ion beam processing device, whereby a specimen for TEM observation is obtained.

The obtained specimen is observed using a TEM (JEM-F200 available from JEOL Ltd.) (observation condition: acceleration voltage 200 kV), and a HAADF-STEM image is obtained.

The HAADF-STEM image is subjected to shape observation and subjected to EDX using a device (Dual SDD available from JEOL Ltd.) attached to the TEM (analysis condition: acceleration voltage 200 kV), and elemental mapping is performed (mapping resolution: 1.96 nm/pixel).

From the obtained result of elemental mapping, portions of the positive electrode material alone are extracted, and simplified quantitative calculation is performed in each pixel such that the total of the Mn content and the Ni content (molar amount) becomes 100%.

The Mn content is divided by the Ni content to obtain the molar ratio (Mn/Ni). A relative frequency distribution is generated with a horizontal axis showing the molar ratio (Mn/Ni) at 0.01 pitch and a vertical axis showing the relative frequency. The mean value and the half-value width in the generated relative frequency distribution are determined.

### <Mass Increase Amount>

It is preferable that a mass increase amount of the positive electrode material of the invention (lithium-containing nickel manganese composite oxide) when left to stand in an air atmosphere at temperature of 25°C and humidity of 60% for 240 hours (also simply referred to as "mass increase amount" in this paragraph) is smaller.

In this regard, the temperature of "25°C" means "25 ± 3°C", and the humidity of "60%" means "60 ± 5%."

When the positive electrode material is left to stand in an air atmosphere, lithium in the positive electrode material or a lithium-containing compound remaining on the surface of the positive electrode material reacts with moisture and carbon dioxide present in an air atmosphere, whereby the mass of the positive electrode material may increase.

A small mass increase amount of the positive electrode material when left to stand in an air atmosphere indicates that the positive electrode material scarcely undergoes deterioration caused by reaction with moisture and carbon dioxide present in an air atmosphere. The positive electrode material whose mass increase amount is small suppresses its deterioration in an air atmosphere and has excellent handleability. In addition, there is an excellent effect of suppressing decomposition of an electrolyte.

Moreover, as the mass increase amount of the positive electrode material when left to stand in an air atmosphere is smaller, an amount of lithium drawn from the positive electrode material due to reaction with moisture and carbon dioxide is smaller. In this case, the decrease in the charging-discharging capacity due to withdrawal of lithium from the positive electrode material is suppressed.

Specifically, the mass increase amount of the positive electrode material of the invention is preferably not more than 0.75 mass%, more preferably not more than 0.70 mass%, further preferably not more than 0.60 mass% and particularly preferably not more than 0.50 mass%.

The mass increase amount is determined as described below. First, a specified amount of a specimen (positive electrode material) is weighed and placed in a sample bottle. The sample bottle having the specimen therein is then stored in a constant temperature and humidity bath being retained in an atmosphere at temperature of 25°C and humidity of 60% and left to stand for 240 hours. Based on the difference between the mass of the specimen before being left to stand and the mass of the specimen after being left to stand, the mass increase amount is determined.

### [Method of Producing Positive Electrode Material]

Next, the method of producing the positive electrode material of the invention is described.

The method of producing the positive electrode material of the invention is a method of producing the foregoing positive electrode material of the invention, in which the foregoing precursor of the invention is mixed with a lithium-containing compound, and the obtained mixture is fired to obtain a fired product.

The fired product (lithium-containing nickel manganese composite oxide) is appropriately pulverized or the like, whereby the foregoing positive electrode material of the invention is obtained.

### <Mixing>

The precursor of the invention is mixed with a lithium-containing compound to thereby obtain a mixture.

At this time, a molar ratio of a content of the lithium-containing compound in terms of lithium to the total of a content of the precursor in terms of nickel and a content of the precursor in terms of manganese (hereinafter, also expressed as "Li/(Ni + Mn)" in some cases) is preferably more than 1.03 and less than 1.10 and more preferably not less than 1.04 and not more than 1.08.

When Li/(Ni + Mn) falls under this range, the positive electrode material to be obtained (the second embodiment) easily achieves the suitable second phase content.

Examples of the lithium-containing compound include lithium hydroxide and lithium carbonate, and lithium hydroxide is particularly preferred because the reaction temperature is low.

When the positive electrode material to be obtained contains the element A described above, a compound containing the element A (hereinafter, also referred to as "A-containing compound") may be further mixed in the mixture.

Examples of the A-containing compound include, but are not limited to, a hydroxide, an oxide, a chloride, and salts (such as sulfate, carbonate and acetate) of the element A.

A mixing amount of the A-containing compound is appropriately adjusted depending on the desired composition.

### <Firing>

The mixture obtained by the foregoing mixing is fired, whereby a fired product is obtained.

In this process, it is preferable that the mixture is subjected to preliminary firing at temperature of not lower than 400°C and not higher than 700°C and thereafter subjected to main firing at temperature of not lower than 800°C and not higher than 1,000°C.

Such firing condition allows the obtained positive electrode material (the second embodiment) of the invention to easily achieve the suitable second phase content.

The main firing temperature is more preferably not lower than 900°C and not higher than 1,000°C and further preferably not lower than 925°C and not higher than 975°C, because the suitable second phase content is more easily achieved.

The atmosphere for the preliminary firing is not particularly limited, and examples thereof include an oxidizing atmosphere (e.g., air atmosphere) and a non-oxidizing atmosphere. A non-oxidizing atmosphere is particularly preferred. Examples of non-oxidizing atmosphere include a non-oxidizing atmosphere having an oxygen concentration of not higher than 10 vol% (nitrogen atmosphere as a specific example). Preliminary firing in a non-oxidizing atmosphere suppresses generation of a nickel oxide and/or a manganese oxide having low activity, whereby lithium is likely to be dispersed evenly in the fired product.

The atmosphere for the main firing is not particularly limited, and examples thereof include an oxidizing atmosphere (e.g., air atmosphere) and a non-oxidizing atmosphere.

The firing time is not particularly limited.

The firing time of the preliminary firing is preferably not less than 6 hours and not more than 48 hours and more preferably not less than 12 hours and not more than 36 hours.

The firing time of the main firing is preferably not less than 5 hours and not more than 30 hours and more preferably not less than 10 hours and not more than 25 hours.

### <Washing with Water>

The fired product is preferably washed with water. The fired product having been washed with water is then appropriately dried, whereby the positive electrode material is obtained. Through the washing with water, the obtained positive electrode material has excessive lithium that has not entered inside the positive electrode material washed away. Accordingly, an amount of lithium remaining in the charging state decreases, and the above-described mass increase amount becomes small.

Following the washing with water and the drying, the positive electrode material is preferably further fired at not lower than 200°C and not higher than 800°C.

### [Lithium Ion Secondary Battery]

The lithium ion secondary battery of the invention is a lithium ion secondary battery including a positive electrode containing the foregoing positive electrode material of the invention, a negative electrode and an ion conductive medium that is interposed between the positive electrode and the negative electrode and that conducts lithium ions.

The lithium ion secondary battery of the invention has excellent discharging capacity and cycle characteristic.

The ion conductive medium is, for example, an electrolyte such as a non-aqueous electrolytic solution.

The lithium ion secondary battery of the invention may further include a separator.

In addition, any configuration of a conventionally known lithium ion secondary battery can be adopted, except that the positive electrode material of the invention is used.

### EXAMPLES

The invention is specifically described below with reference to Examples. However, the present invention should not be construed as being limited to the following examples.

### <Production of Precursor>

The precursor No. 1 to the precursor No. 5 were produced as described below.

### «Precursor No. 1»

A raw material aqueous solution was obtained by mixing an aqueous nickel sulfate (NiSO₄) solution of 0.4 mol/L, an aqueous manganese sulfate (MnSO₄) solution of 0.4 mol/L, and an aqueous ammonium sulfate ((NH₄)₂SO₄) solution of 0.2 mol/L. The raw material aqueous solution had a molar ratio (NH₄/(Ni + Mn)) of 0.25. The raw material aqueous solution had pH of 4.6.

Into a reaction vessel, 1L of pure water and an aqueous sodium hydroxide solution were added to obtain a reaction vessel solution with pH being adjusted to 11.

The raw material aqueous solution was charged into the reaction vessel solution at a rate of 150 mL/h. While the raw material aqueous solution was charged, an aqueous alkaline solution (10 mass% of aqueous sodium hydroxide solution) was charged into the reaction vessel solution with the reaction vessel solution being controlled to have pH of 11. A precipitate was obtained in this manner. At this time, while the reaction vessel solution was stirred with a stirring rod at 450 rpm, the temperature of the reaction vessel solution was controlled to 40°C.

The precipitate was filtrated and washed with water. Subsequently, the precipitate was dried in a vacuum atmosphere at 50°C for 10 hours using a vacuum dryer.

Thus, the precursor No. 1 was obtained.

### <<Precursor No. 2>>

An air atmosphere was adopted as the drying atmosphere for the precipitate. In the same manner as that of the precursor No. 1 except the above-described change, the precursor No. 2 was obtained.

### <<Precursor No. 3>>

An aqueous ammonium sulfate solution was not mixed in the raw material aqueous solution. The raw material aqueous solution had pH of 6.5. The raw material aqueous solution and ammonium water of 0.06 mol/L were each charged into the reaction vessel at a rate of 150 mL/h. While the raw material aqueous solution and ammonium water were charged, an aqueous alkaline solution (10 mass% of aqueous sodium hydroxide solution) was charged into the reaction vessel solution with the reaction vessel solution being controlled to have pH of 11. A precipitate was obtained in this manner.

In the same manner as that of the precursor No. 1 except the above-described changes, the precursor No. 3 was obtained.

### <<Precursor No. 4>>

An air atmosphere was adopted as the drying atmosphere for the precipitate. The drying temperature for the precipitate was 110°C.

In the same manner as that of the precursor No. 1 except the above-described changes, the precursor No. 4 was obtained.

### <<Precursor No. 5>>

An air atmosphere was adopted as the drying atmosphere for the precipitate. The drying temperature for the precipitate was 110°C.

In the same manner as that of the precursor No. 3 except the above-described changes, the precursor No. 5 was obtained.

### <Properties of Precursor>

Of each of the precursor No. 1 to the precursor No. 5 thus obtained, the molar ratio (Ni/(Ni + Mn), the exchange splitting width (ΔE) of Mn3s, the average valence of Mn, the primary particle size, the mass reduction amount (mass reduction amount when heated from room temperature to 1,050°C in an air atmosphere), and the [001]/[101] peak ratio were determined. The results are shown in Table 1 below.

**[Table 1] Table 1**

| Precursor No. | Raw material aqueous solution | | | | | | | | Reaction vessel solution pH | Drying condition | | Ni/ (Ni+Mn) | Mn 3s exchange splitting width [eV] | Average valence of Mn | Primary particle size [µm] | Mass reduction amount [mass%] | [001]/ [101] peak ratio | Remakrs |
|---|---|---|---|---|---|---|---|---|---|---|---|---|---|---|---|---|---|---|
| | Ni source | | Mn source | | NH₄ source | | NH₄/ (Ni+Mn) | pH | | Atmosphere | Temp. [°C] | | | | | | | |
| | Ni salt | Content [mol/L] | Mn salt | Content [mol/L] | NH₄ salt | Content [mol/L] | | | | | | | | | | | | |
| 1 | NiSO₄ | 0.4 | MnSO₄ | 0.4 | (NH₄)₂SO₄ | 0.2 | 0.25 | 4.6 | 11 | Vacuum | 50 | 0.5 | 5.4 | 3.0 | 0.1 | 22 | 1.5 | IE |
| 2 | NiSO₄ | 0.4 | MnSO₄ | 0.4 | (NH₄)₂SO₄ | 0.2 | 0.25 | 4.6 | 11 | Air | 50 | 0.5 | 5.0 | 3.7 | 0.3 | 20 | 3.1 | IE |
| 3 | NiSO₄ | 0.4 | MnSO₄ | 0.4 | - | 0 | 0 | 6.5 | 11 | Vacuum | 50 | 0.5 | 5.2 | 3.4 | 0.6 | 19 | 4.2 | IE |
| 4 | NiSO₄ | 0.4 | MnS0₄ | 0.4 | (NH₄)₂SO₄ | 0.2 | 0.25 | 4.6 | 11 | Air | 110 | 0.5 | 4.8 | 4.1 | 0.6 | 15 | 4.8 | CE |
| 5 | NiSO₄ | 0.4 | MnSO₄ | 0.4 | - | 0 | 0 | 6.5 | 11 | Air | 110 | 0.5 | 4.8 | 4.1 | 0.7 | 14 | 16.2 | CE |

| | | | | | | | | | | | | | | | | | | |
|---|---|---|---|---|---|---|---|---|---|---|---|---|---|---|---|---|---|---|
| IE: Inventive Example CE: Comparative Example | | | | | | | | | | | | | | | | | | |

### <Production of Positive Electrode Material (First Embodiment)>

Using the precursor No. 1 to the precursor No. 5 thus obtained, the positive electrode material No. 1 to the positive electrode material No. 10 were produced in the following manner.

### <<Positive Electrode Material No. 1»

The precursor No. 1 and lithium hydroxide were mixed, whereby a mixture was obtained. The molar ratio (Li/(Ni + Mn)) when mixing was 1.05. The obtained mixture was fired, whereby a fired product was obtained. More specifically, the mixture was subjected to preliminary firing in a nitrogen atmosphere at 650°C for 24 hours and thereafter subjected to main firing in an air atmosphere at 950°C for 15 hours. The obtained fired product was pulverized using a mortar. The fired product was not washed with water. Thus, the positive electrode material No. 1 was obtained.

### <<Positive Electrode Material No. 2 to Positive Electrode Material No. 5>>

The precursor No. 2 to the precursor No. 5 were used respectively.

In the same manner as that in the positive electrode material No. 1 except the above-described change, each of the positive electrode material No. 2 to the positive electrode material No. 5 was obtained.

### <<Positive Electrode Material No. 6 to Positive Electrode Material No. 10>>

In the mixture, an Al containing compound (aluminum nitrate), a Ti containing compound (titanium nitrate), a Zr containing compound (zirconium nitrate), a K containing compound (potassium nitrate) and a Ba containing compound (barium nitrate) were further mixed respectively.

In the same manner as that in the positive electrode material No. 1 except the above-described change, each of the positive electrode material No. 6 to the positive electrode material No. 10 was obtained.

### <Properties of Positive Electrode Material (First Embodiment) and Evaluation>

Of each of the positive electrode material No. 1 to the positive electrode material No. 10 thus obtained, the composition, the mass increase amount (mass increase amount when left to stand in an air atmosphere at temperature of 25°C and humidity of 60% for 240 hours), the discharging capacity and the cycle characteristic were determined. The results are shown in Table 2 below.

The discharging capacity and the cycle characteristic were determined as described below (the same applies to the second embodiment to be described later).

### <<Discharging Capacity>>

To the positive electrode material (90 mass%), acetylene black (5 mass%) and polyvinylidene fluoride (5 mass%), N-methyl-2 pyrolidone were added, and the resultant was kneaded, whereby a mixture was obtained. The obtained mixture was applied to an aluminum current collector in a thickness of 320 µm, whereby a coating was formed. A laminate of the coating and the aluminum current collector was pressurized using a roll press with a gap being set to 80 µm. A disc with a diameter of 14 mm was punched out of the pressurized laminate. The punched disc was dried in a vacuum at 150°C for 15 hours. The disc having been dried in a vacuum was treaded as a positive electrode.

As a negative electrode, a lithium metal sheet was used. As a separator, a polypropylene porous film (Celgard #2400) was used.

A non-aqueous electrolytic solution was obtained by dissolving one mol of LiPF₆ in one litter of a mixed solution of ethylene carbonate (EC) and dimethyl carbonate (DMC) mixed at a volume ratio (EC/DMC) of 1/1.

Using the positive electrode, the negative electrode, the separator and the non-aqueous electrolytic solution as described above, a lithium ion secondary battery (test cell) was produced in a glovebox substituted with argon. Using the produced test cell, charging-discharging operation was performed with a constant current value of 0.2C and a voltage in a range of 2.75 to 4.4 V, and the discharging capacity [mAh/g] was determined.

### <<Cycle Characteristic>>

The foregoing charging-discharging operation was repeated 40 times (40 cycles) with a current value of 0.5C. Based on the obtained discharging capacity [mAh/g], the cycle characteristic was calculated using the following equation.

### Cycle characteristic [%] = (Discharging capacity of 40th cycle/Discharging capacity of 1st cycle) x 100

[Table 2]

**Table 2**

| Positive electrode material No. | Precursor No. | Li/ (Ni+Mn) | Main firing | | | Washing with water | Composition of positive electrode material LiₐNiₓMn₁₋ₓA_{y}O₂ | | | | Mass increase amount [mass%] | Discharging capacity [mAh/g] | Cycle characteristic [%] | Remarks |
|---|---|---|---|---|---|---|---|---|---|---|---|---|---|---|
| | | | Atmos -phere | Temp. [°C] | Time [h] | | a | x | y | A | | | | |
| 1 | 1 | 1.05 | Air | 950 | 15 | N.A. | 1.04 | 0.48 | 0 | - | 0.67 | 179 | 90 | IE |
| 2 | 2 | 1.05 | Air | 950 | 15 | N.A. | 1.05 | 0.49 | 0 | - | 0.66 | 173 | 90 | IE |
| 3 | 3 | 1.05 | Air | 950 | 15 | N.A. | 1.04 | 0.50 | 0 | - | 0.69 | 171 | 87 | IE |
| 4 | 4 | 1.05 | Air | 950 | 15 | N.A. | 1.06 | 0.48 | 0 | - | 0.64 | 152 | 74 | CE |
| 5 | 5 | 1.05 | Air | 950 | 15 | N.A. | 1.04 | 0.48 | 0 | - | 0.66 | 121 | 70 | CE |
| 6 | 1 | 1.05 | Air | 950 | 15 | N.A. | 1.03 | 0.48 | 0.020 | Al | 0.71 | 170 | 93 | IE |
| 7 | 1 | 1.05 | Air | 950 | 15 | N.A. | 1.04 | 0.48 | 0.015 | Ti | 0.68 | 167 | 92 | IE |
| 8 | 1 | 1.05 | Air | 950 | 15 | N.A. | 1.04 | 0.48 | 0.012 | Zr | 0.69 | 170 | 91 | IE |
| 9 | 1 | 1.05 | Air | 950 | 15 | N.A. | 1.05 | 0.48 | 0.002 | K | 0.61 | 170 | 92 | IE |
| 10 | 1 | 1.05 | Air | 950 | 15 | N.A. | 1.03 | 0.48 | 0.002 | Ba | 0.58 | 169 | 91 | IE |

| | | | | | | | | | | | | | | |
|---|---|---|---|---|---|---|---|---|---|---|---|---|---|---|
| IE: Inventive Example CE: Comparative Example | | | | | | | | | | | | | | |

### <Summary of Evaluation Result of Positive Electrode Material (First Embodiment)>

As shown in Tables 1 and 2 above, the positive electrode material No. 1 to the positive electrode material No. 3 and the positive electrode material No. 6 to the positive electrode material No. 10 produced using the precursor No. 1 to the precursor No. 3 having the average valence of Mn of less than 4.0 had excellent discharging capacity and cycle characteristic, as compared to the positive electrode material No. 4 to the positive electrode material No. 5 produced using the precursor No. 4 to the precursor No. 5 having the average valence of Mn of not less than 4.0.

### <Production of Positive Electrode Material (Second Embodiment)>

Using the obtained precursor No. 1, the positive electrode material No. 11 to the positive electrode material No. 18 were produced in the following manner.

### <<Positive Electrode Material No. 11>>

The precursor No. 1 and lithium hydroxide were mixed, whereby a mixture was obtained. The molar ratio (Li/(Ni + Mn)) when mixing was 1.05. The obtained mixture was fired, whereby a fired product was obtained. More specifically, the mixture was subjected to preliminary firing at 650°C for 24 hours in a nitrogen atmosphere and thereafter subjected to main firing at 1,000°C for 5 hours in an air atmosphere. The obtained fired product was pulverized using a mortar. The fired product was not washed with water. Thus, the positive electrode material No. 11 was obtained.

### <<Positive Electrode Material No. 12>>

In the main firing, the firing temperature was 900°C, and the firing time was 15 hours.

In the same manner as that of the positive electrode material No. 11 except the above-described change, the positive electrode material No. 12 was obtained.

### <<Positive Electrode Material No. 13>>

In the main firing, the firing temperature was 950°C, and the firing time was 10 hours.

In the same manner as that of the positive electrode material No. 11 except the above-described change, the positive electrode material No. 13 was obtained.

### <<Positive Electrode Material No. 14>>

In the main firing, the firing temperature was 950°C, and the firing time was 15 hours.

The fired product was washed with water and thereafter dried.

In the same manner as that of the positive electrode material No. 11 except the above-described changes, the positive electrode material No. 14 was obtained.

### <<Positive Electrode Material No. 15>>

In the mixture, a S containing compound (lithium sulfate) was further mixed.

In the main firing, the firing temperature was 950°C, and the firing time was 15 hours.

In the same manner as that of the positive electrode material No. 11 except the above-described changes, the positive electrode material No. 15 was obtained.

### <<Positive Electrode Material No. 16>>

The molar ratio (Li/(Ni + Mn)) when mixing was 1.20.

In the main firing, the firing temperature was 950°C, and the firing time was 10 hours.

In the same manner as that of the positive electrode material No. 11 except the above-described changes, the positive electrode material No. 16 was obtained.

### <<Positive Electrode Material No. 17>>

In the main firing, the firing temperature was 780°C, and the firing time was 15 hours.

In the same manner as that of the positive electrode material No. 11 except the above-described change, the positive electrode material No. 17 was obtained.

### <<Positive Electrode Material No. 18>>

In the main firing, the firing temperature was 1,080°C, and the firing time was 15 hours.

In the same manner as that of the positive electrode material No. 11 except the above-described change, the positive electrode material No. 18 was obtained.

### <Properties of Positive Electrode Material (Second Embodiment) and Evaluation>

Of each of the positive electrode material No. 11 to the positive electrode material No. 18 thus obtained, the composition, the second phase (Li₂MnO₃) content, the mass increase amount (mass increase amount when left to stand in an air atmosphere at temperature of 25°C and humidity of 60% for 240 hours), the discharging capacity and the cycle characteristic were determined. The results are shown in Table 3 below.

[Table 3]

**Table 3**

| Positive electrode material No. | Precursor No. | Li/ (Ni+Mn) | Main firing | | | Washing with water | Composition of positive electrode material LiₐNiₓMn₁₋ₓA_{y}O₂ | | | | Li₂MnO₃ content [mass%] | Mass increase amount [mass%] | Discharg -ing capacity [mAh/g] | Cycle characteristic [%] | Remarks |
|---|---|---|---|---|---|---|---|---|---|---|---|---|---|---|---|
| | | | Atmosphere | Temp. [°C] | Time [h] | | a | x | y | A | | | | | |
| 11 | 1 | 1.05 | Air | 1000 | 5 | N.A. | 1.02 | 0.48 | 0 | - | 13 | 0.65 | 171 | 86 | IE |
| 12 | 1 | 1.05 | Air | 900 | 15 | N.A. | 1.06 | 0.48 | 0 | - | 6 | 0.66 | 170 | 88 | IE |
| 13 | 1 | 1.05 | Air | 950 | 10 | N.A. | 1.05 | 0.48 | 0 | - | 14 | 0.68 | 172 | 90 | IE |
| 14 | 1 | 1.05 | Air | 950 | 15 | Done | 1.00 | 0.48 | 0 | - | 15 | 0.40 | 170 | 90 | IE |
| 15 | 1 | 1.05 | Air | 950 | 15 | N.A. | 1.04 | 0.48 | 0.016 | S | 11 | 0.67 | 168 | 91 | IE |
| 16 | 1 | 1.20 | Air | 950 | 10 | N.A. | 1.18 | 0.48 | 0 | - | 25 | 1.12 | 158 | 81 | CE |
| 17 | 1 | 1.05 | Air | 780 | 15 | N.A. | 1.05 | 0.48 | 0 | - | 0 | 0.89 | 154 | 72 | CE |
| 18 | 1 | 1.05 | Air | 1080 | 15 | N.A. | 0.98 | 0.48 | 0 | - | 0 | 0.64 | 135 | 78 | CE |

| | | | | | | | | | | | | | | | |
|---|---|---|---|---|---|---|---|---|---|---|---|---|---|---|---|
| IE: Inventive Example CE: Comparative Example | | | | | | | | | | | | | | | |

### <Summary of Evaluation Result of Positive Electrode Material (Second Embodiment)>

As shown in Table 3, the positive electrode material No. 11 to the positive electrode material No. 15 having the second phase (Li₂MnO₃) content of more than 0 mass% and not more than 20 mass% had excellent discharging capacity and cycle characteristic, as compared to the positive electrode material No. 16 to the positive electrode material No. 18 having the second phase (Li₂MnO₃) content of 0 mass% or more than 20 mass%.

### <Mean Value and Half-value Width in Relative Frequency Distribution of Molar Ratio (Mn/Ni)>

Of the positive electrode material No. 1 to the positive electrode material No. 3 and the positive electrode material No. 11, the mean value and the half-value width in their relative frequency distributions of the molar ratio (Mn/Ni) were determined according to the method described above. The values are shown in Table 4 together with the results of discharging capacity and cycle characteristic.

[Table 4]

**Table 4**

| Positive electrode material No. | Precursor No. | NH₄/ (Ni+Mn) | Li/ (Ni+Mn) | Relative frequency distribution of molar ratio (Mn/Ni) | | Discharging capacity [mAh/g] | Cycle characteristic [%] | Remarks |
|---|---|---|---|---|---|---|---|---|
| | | | | Mean value | Half-value width | | | |
| 1 | 1 | 0.25 | 1.05 | 1.07 | 0.67 | 179 | 90 | IE |
| 2 | 2 | 0.25 | 1.05 | 1.06 | 0.73 | 173 | 90 | IE |
| 3 | 3 | 0 | 1.05 | 0.89 | 0.88 | 171 | 87 | IE |
| 11 | 1 | 0.25 | 1.05 | 1.15 | 0.65 | 171 | 86 | IE |

| | | | | | | | | |
|---|---|---|---|---|---|---|---|---|
| IE: Inventive Example | | | | | | | | |

As shown in Table 4 above, the positive electrode material No. 1 to the positive electrode material No. 3 and the positive electrode material No. 11 each had the mean value of not lower than 0.85 and not higher than 1.20 and the half-value width of not more than 0.90 in the relative frequency distribution of the molar ratio (Mn/Ni).

In this regard, the positive electrode material No. 1 and the positive electrode material No. 2 having the mean value of not lower than 0.90 and not higher than 1.10 had excellent discharging capacity and cycle characteristic, as compared to the positive electrode material No. 3 and the positive electrode material No. 11 that did not satisfy this range.

## Claims

1. A precursor of a positive electrode material used in a lithium ion secondary battery,
wherein the precursor is at least one selected from a group consisting of a nickel manganese composite hydroxide and a nickel manganese composite oxide,
wherein the precursor contains nickel and manganese,
wherein a molar ratio of a nickel content to a total of the nickel content and a manganese content is not less than 0.45 and not more than 0.60, and
wherein an average valence of manganese is less than 4.0.

2. The precursor according to claim 1, wherein an average particle size of primary particles is less than 0.6 µm.

3. The precursor according to claim 1 or 2, wherein a mass reduction amount when the precursor is heated from room temperature to 1,050°C in an air atmosphere is not less than 16 mass%.

4. The precursor according to any one of claims 1 to 3, wherein a [001]/[101] peak ratio that is a peak intensity ratio of a peak intensity in a [001] direction to a peak intensity in a [101] direction in X-ray diffraction is not higher than 14,
where a peak intensity in the [001] direction is a maximum peak intensity in a range from 17° to 21° of a diffraction angle 2θ, and a peak in the [101] direction is a maximum peak intensity in a range from 30° to 40° of a diffraction angle 2θ.

5. A method of producing the precursor of any one of claims 1 to 4, the method comprising:
introducing a nickel source, a manganese source, an ammonium source and an aqueous alkaline solution into a reaction vessel solution having pH of not lower than 9 and not higher than 12 to obtain a precipitate.

6. The method of producing the precursor according to claim 5,
wherein an aqueous solution containing the nickel source, the manganese source and the ammonium source is used as a raw material aqueous solution, and
wherein the raw material aqueous solution and the aqueous alkaline solution are introduced into the reaction vessel solution to obtain the precipitate.

7. The method of producing the precursor according to claim 6,
wherein in the raw material aqueous solution, a molar ratio of a content of the ammonium source in terms of ammonium to a total of a content of the nickel source in terms of nickel and a content of the manganese source in terms of manganese is more than 0 and not more than 1.

8. The method of producing the precursor according to claim 6 or 7, wherein the raw material aqueous solution has pH of not higher than 6.

9. The method of producing the precursor according to any one of claims 6 to 8, wherein the precipitate is dried at temperature of not higher than 100°C.

10. The method of producing the precursor according to any one of claims 6 to 9, wherein the precipitate is dried in a non-oxidizing atmosphere.

11. A positive electrode material used in a lithium ion secondary battery,
wherein the positive electrode material is a lithium-containing nickel manganese composite oxide,
wherein the positive electrode material contains lithium, nickel and manganese, and
wherein the positive electrode material is obtained using the precursor of any one of claims 1 to 4.

12. A positive electrode material used in a lithium ion secondary battery,
wherein the positive electrode material is a lithium-containing nickel manganese composite oxide,
wherein the positive electrode material contains lithium, nickel and manganese, and
wherein a content of a composite oxide expressed by Formula Li₂MnO₃ is more than 0 mass% and not more than 20 mass%.

13. The positive electrode material according to claim 11 or 12, further containing at least one element A selected from the group consisting of aluminum, silicon, titanium, zirconium, calcium, potassium, barium, strontium and sulfur.

14. The positive electrode material according to any one of claims 11 to 13, wherein in a relative frequency distribution of a molar ratio between a manganese content and a nickel content, a mean value is not lower than 0.85 and not higher than 1.20, and a half-value width is not more than 0.90.

15. The positive electrode material according to any one of claims 11 to 14, wherein a mass increase amount when the positive electrode material is left to stand in an air atmosphere at temperature of 25°C and humidity of 60% for 240 hours is not more than 0.75 mass%.

16. A method of producing the positive electrode material of any one of claims 11 to 15, the method comprising:
mixing the precursor of any one of claims 1 to 4 with a lithium-containing compound, and firing a mixture thus obtained to obtain a fired product.

17. The method of producing the positive electrode material according to claim 16, wherein a molar ratio of a content of the lithium-containing compound in terms of lithium to a total of a content of the precursor in terms of nickel and a content of the precursor in terms of manganese is more than 1.03 and less than 1.10.

18. The method of producing the positive electrode material according to claim 16 or 17, wherein the mixture is subjected to preliminary firing at temperature of not lower than 400°C and not higher than 700°C and thereafter subjected to main firing at temperature of not lower than 800°C and not higher than 1,000°C to obtain the fired product.

19. The method of producing the positive electrode material according to any one of claims 16 to 18, wherein the fired product is washed with water.

20. A lithium ion secondary battery comprising a positive electrode containing the positive electrode material of any one of claims 11 to 15, a negative electrode, and an ion conductive medium that is interposed between the positive electrode and the negative electrode and that conducts lithium ions.
